(19) Europäisches Patentamt
European Patent Office
Office européen des brevets

(11) Publication number: **0 072 114**
**B1**

(12) # EUROPEAN PATENT SPECIFICATION

(45) Date of publication of patent specification: **07.11.84**

(51) Int. Cl.³: **C 09 J 3/00**, C 08 L 67/06, C 08 F299/04

(21) Application number: **82303813.8**

(22) Date of filing: **21.07.82**

(54) **Unsaturated curable polyester compositions.**

(30) Priority: **28.07.81 GB 8123143**

(43) Date of publication of application: **16.02.83 Bulletin 83/07**

(45) Publication of the grant of the patent: **07.11.84 Bulletin 84/45**

(84) Designated contracting states: **AT BE CH DE FR IT LI LU NL SE**

(56) References cited:
**DE-A- 2 435 867**
**DE-A- 2 626 326**
**FR-A- 1 390 572**

(73) Proprietor: **BIP CHEMICALS LIMITED**
**20 St. Mary's Parsonage**
**Manchester M3 2NL (GB)**

(72) Inventor: **Downing, Brian York**
**12 Frayne Avenue**
**Kingswinford West Midlands DY6 9DU (GB)**
Inventor: **Whitfield, Leslie**
**112 St Johns Avenue**
**Kidderminster Worcs DY11 6AX (GB)**

(74) Representative: **Newman, Dennis Daniel Ernest et al**
**20, St. Mary's Parsonage**
**Manchester, M3 2NL. (GB)**

**EP 0 072 114 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to unsaturated curable polyester compositions such as are used in the manufacture of moulded laminated products.

Polyester compositions of the kind just referred to are based on (a) an unsaturated polyester derived from a glycol component, for example propylene glycol, and a dicarboxylic acid component which must include one having ethylenic unsaturation, usually an αβ-unsaturated acid, such as maleic acid, and (b) an unsaturated monomer copolymerisable with the unsaturated polyester, for example, styrene, methyl methacrylate, vinyl acetate, acrylonitrile. These monomeric compounds are liquids of boiling point below 150 °C, and they tend to evaporate from the compositions during moulding operations, giving rise to significant levels of concentration in the working atmosphere. This is a cause for concern, because inhalation of such monomeric compounds may affect health.

The rate of evaporation of a monomer can be considerably reduced by including in the polyester composition a small proportion (up to about 2 % by weight, and usually 0.05-0.5 %) of an evaporation inhibitor such as paraffin wax or other waxy material such as stearyl stearate. However, the inclusion of this material is accompanied by a deterioration in the properties of products moulded from the polyester composition, and in particular by a marked tendency for laminated products moulded by the " delayed lay-up " procedure from layers of fibrous material impregnated with the composition, to delaminate when the product is stressed.

The present invention provides compositions which, while including an evaporation inhibitor, also contain an additive to reduce the tendency to delamination which the evaporation inhibitor causes.

According to the invention there is provided an unsaturated curable polyester composition comprising an unsaturated polyester and an unsaturated monomer of boiling point below 150 °C copolymerisable with the polyester, together with a small proportion of an agent to inhibit evaporation of the unsaturated monomer, in which composition there is present as adhesion promoter, in an amount not greater than 5 % by weight of the composition, a compound of the formula

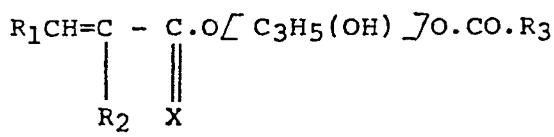

wherein

$R_1$ represents H, an alkyl or cycloaliphatic group containing up to 6 carbon atoms, or a phenyl group which may contain 1 or 2 methyl groups as substituents ;

$R_2$ represents H or $CH_3$ ;

X represents $H_2$ ; H, $CH_3$ ; $(CH_3)_2$ ; or =O ;

$[C_3H_5(OH)]$ represents $.CH_2.CH(OH).CH_2$ or $.CH_2.CH(CH_2OH).$ ; and

$R_3$ represents an aliphatic hydrocarbon radical, saturated or unsaturated, containing from 5 to 17 carbon atoms.

Example of such adhesion promoters are :

A. 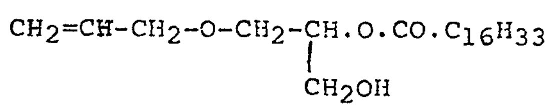

B. 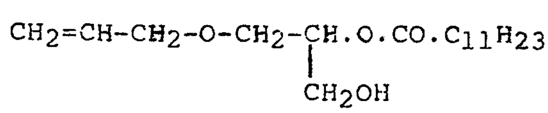

C. 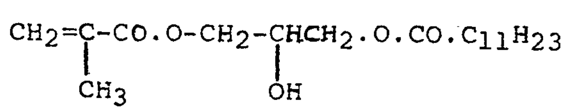

Preferably, the adhesion promoter is a compound obtainable by the reaction of a glycidyl compound

D. 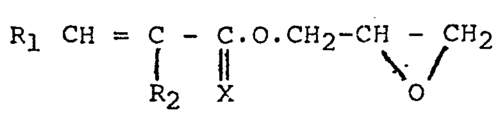

with a long chain aliphatic acid $R_3$.COOH. Particularly suitable glycidyl compounds from which the promoters can be obtained are allyl glycidyl ether :

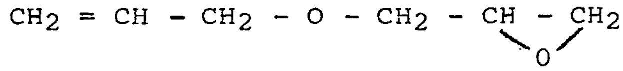

and glycidyl methacrylate :

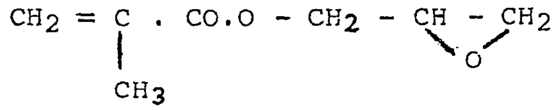

These two are the most readily available members of the genus D defined above.

The long chain aliphatic acid $R_3$.COOH is preferably one containing from 12 to 18 carbon atoms, for example lauric, myristic, palmitic, stearic and oleic acids.

Preferably the adhesion promoter forms 0.1-5 % by weight of the polyester composition, and a particularly preferred range is 0.5-2.5 %.

The preparation of suitable adhesion promoters from the commercially available materials allyl glycidyl ether and glycidyl methacrylate will now be described.

1. Preparation from Allyl Glycidyl Ether

160 g (0.8 mole) of lauric acid were put into a 500 ml flask fitted with a thermometer, stainless steel anchor-type stirrer, nitrogen inlet tube and reflux condenser. A steady stream of nitrogen was passed into the flask, which was then heated so as to melt the lauric acid. 0.125 g of hydroquinone (polymerisation inhibitor) and 91.2 g (0.8 mole) of allyl glycidyl ether were added and the reactor contents were then heated with stirring to 175-180 °C. This temperature was maintained for 15 hrs, during which time the acid value of the product fell to 14.6 mg. KOH/g. The reaction was terminated by cooling the flask and its contents to room temperature. A light yellow oil was obtained, with a viscosity at 25 °C less than $50 \cdot 10^{-3}$ Pa · s.

The oil probably has the structure B which appears earlier in this specification.

2. Preparation from Glycidyl Methacrylate

Using the same apparatus and technique as described above 140 g. of lauric acid (0.7 mole) was reacted with 99.5 g. (0.7 mole) of glycidyl methacrylate in the presence of 0.12 g. of hydroquinone for 4 hrs at 130-135 °C. During this time the acid value of the product fell to 9.7 mg. KOH/g. The final product was a light yellow oil with a viscosity at 25 °C less than $50 \cdot 10^{-3}$ Pa · s. This is probably a mixture of isomers, of which C given earlier is one, the other being the corresponding compound containing a primary OH group.

An adhesion promoter, such as the product of preparation 1 or 2, can be utilised by including it at a level not greater than about 5 % by weight in a conventional unsaturated curable polyester composition comprising unsaturated polyester dissolved in copolymerisable unsaturated monomer of low boiling point and containing evaporation inhibitor. Such a conventional system might be obtained as follows :

3. Preparation of Conventional Unsaturated Curable Polyester Composition

The following materials were heated together at 200 °C until the product had an acid value of 30-50 mg. KOH/g.

1.545 moles ethylene glycol
1.545 moles propylene glycol
2.0 moles phthalic anhydride
1.0 mole maleic anhydride

The solid product was dissolved in styrene to form a solution containing 57.5 % by weight of resin and 42.5 % by weight of styrene, and to this solution was added a conventional cobalt naphthenate accelerator (containing 10 % by weight of cobalt metal) in an amount forming 0.15 % by weight of the whole. This is the Formulation P referred to later.

Formulation Q was prepared identically except for the additional inclusion of paraffin wax (0.1 % by weight of the whole). Formulation Q had a reduced rate of styrene evaporation, but in use it gave laminated products of reduced resistance to delamination.

## Example 1

The reaction product of Preparation 1 set out earlier was used to make a composition as follows :

| | | |
|---|---|---|
| Unsaturated polyester, styrene, accelerator | as before | 100 parts |
| Paraffin wax | | 0.1 part |
| Lauric acid/allyl glycidyl ether reaction product | | 1.0 part |

## Example 2

The reaction product of Preparation 2 was used to make a composition as follows :

| | | |
|---|---|---|
| Unsatured polyester, styrene, accelerator | as before | 100 parts |
| Paraffin wax | | 0.1 part |
| Lauric acid/allyl glycidyl methacrylate reaction product | | 1.0 part |

## Test Results

Formulations P and Q, and the formulations of Examples 1 and 2, were submitted to a standard test for styrene emission in the absence of catalyst. They were also submitted to a standard test for interlaminar adhesion when used (catalysed by a 1 % addition of methyl ethyl ketoneperoxide) in the conventional construction of moulded laminates from sheets of glass fibre impregnated with the formulations. Results were :

| Formulation | P | Q | Example 1 | Example 2 |
|---|---|---|---|---|
| Rate of styrene evaporation ($g/metre^2/min$) at 20 °C | | | | |
| after 10 mins | 1.88 | 0.84 | 1.1 | 1.6 |
| 30 mins | 1.1 | 0 | 0 | 0.28 |
| 60 mins | 0.8 | 0 | 0 | 0 |
| Total styrene loss during 1 hr ($g/metre^2$) | 92.8 | 25.6 | 30.4 | 44.8 |
| Interlaminar Adhesion % area of failure | NIL | 55 % | NIL | NIL |

The results show that :

(1) In the absence of wax and adhesion promoter the polyester composition has good interlaminar adhesion properties but has a high rate of loss of styrene.

(2) The inclusion of wax greatly reduces styrene evaporation but has a severe effect on interlaminar adhesion.

(3) The inclusion of the adhesion promoter in the wax-containing compositions restores good interlaminar adhesion properties without causing too great an increase in styrene evaporation.

## Claims

1. An unsaturated curable polyester composition comprising an unsaturated polyester and an unsaturated monomer of boiling point below 150 °C copolymerisable with the polyester, together with a small proportion of an agent to inhibit evaporation of the unsaturated monomer, in which composition there is present as adhesion promoter, in an amount not greater than 5 % by weight of the composition, a compound of the formula

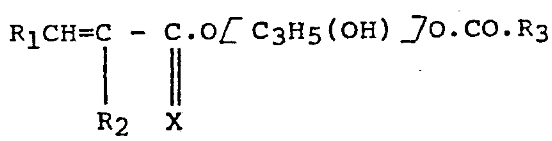

wherein

$R_1$ represents H, an alkyl or cycloaliphatic group containing up to 6 carbon atoms, ar a phenyl group which may contain 1 or 2 methyl groups as substituents ;

$R_2$ represents H or $CH_3$ ;

X represents $H_2$ ; H, $CH_3$ ; $(CH_3)_2$ ; or =O ;

$[C_3H_5(OH)]$ represents $.CH_2.CH(OH).CH_2.$ or $.CH_2.CH(CH_2OH)$ ; and

$R_3$ represents an aliphatic hydrocarbon radical, saturated or unsaturated, containing from 5 to 17 carbon atoms.

2. A composition according to Claim 1, in which the adhesion promoter is one obtained by the reaction of a glycidyl compound

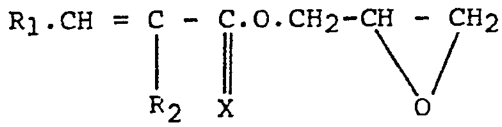

with a long chain aliphatic acid $R_3.COOH$

3. A composition according to Claim 2, in which the glycidyl compound is allyl glycidyl ether.

4. A composition according to Claim 2, in which the glycidyl compound is glycidyl methacrylate.

5. A composition according to Claim 2, 3 or 4, in which the long chain aliphatic acid contains from 12 to 18 carbon atoms.

6. A composition according to Claim 5, in which the long chain aliphatic acid is lauric acid.

7. A composition according to any one of Claims 1 to 6, containing 0.1-5 % by weight of the adhesion promoter.

8. A composition according to Claim 7, in which the content of adhesion promoter is 0.5-2.5 % by weight.

**Ansprüche**

1. Ungesättigte vulkanisierbare Polyestermasse enthaltend einen ungesättigten Polyester und ein ungesättigtes Monomeres vom Siedepunkt unter 150 °C, das mit dem Polyester kopolymerisierbar ist, zusammen mit einer kleinen Menge eines Mittels zur Inhibierung der Verdampfung des ungesättigten Monomeren, dadurch gekennzeichnet, daß als Adhesionsbegünstiger in einer Menge von nicht mehr als 5 Gew.-% der Masse eine Verbindung der Formel

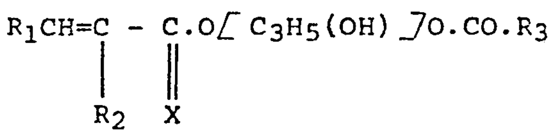

vorliegt, worin

$R_1$ Wasserstoff, eine Alkyl- oder cycloaliphatische Gruppe mit bis zu 6 Kohlenstoffatomen oder eine Phenylgruppe, die 1 oder 2 Methylgruppen als Substituenten enthalten kann ;

$R_2$ Wasserstoff oder $CH_3$

X $H_2$ ; H, $CH_3$ ; $(CH_3)_2$ ; oder =O ;

$[C_3H_5(OH)]$ die Gruppen $—CH_2—CH(OH)—CH_2—$ oder $—CH_2—CH(CH_2OH)—$ ; und

$R_3$ einen aliphatischen Kohlenwasserstoffrest, der gesättigt oder ungesättigt sein kann, mit 5 bis 17 Kohlenstoffatomen bedeuten.

2. Masse nach Anspruch 1, dadurch gekennzeichnet, daß der Adhesionsbegünstiger ein solcher ist, der durch die Umsetzung einer Glycidylverbindung

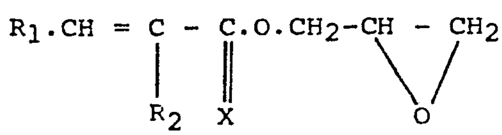

mit einer langkettigen aliphatischen Säure $R_3—COOH$ erhalten ist.

3. Masse nach Anspruch 2, dadurch gekennzeichnet, daß die Glycidylverbindung Allylglycidyläther ist.

4. Masse nach Anspruch 2, dadurch gekennzeichnet, daß die Glycidylverbindung Glycidylmethacrylat ist.

5. Masse nach Anspruch 2, 3 oder 4, dadurch gekennzeichnet, daß die langkettige aliphatische Säure 12 bis 18 Kohlenstoffatome enthält.

6. Masse nach Anspruch 5, dadurch gekennzeichnet, daß die langkettige aliphatische Säure Laurinsäure ist.

7. Masse nach einem der Ansprüche 1 bis 6, dadurch gekennzeichnet, daß sie 0,1 bis 5 Gew.-% des Adhesionsbegünstigers enthält.

8. Masse nach Anspruch 7, dadurch gekennzeichnet, daß der Gehalt an Adhesionsbegünstiger 0,5 bis 2,5 Gew.-% beträgt.

**Revendications**

1. Composition de polyester insaturé durcissable comprenant un polyester insaturé et un monomère insaturé d'un point d'ébullition inférieur à 150 °C copolymérisable avec le polyester, conjointement avec une faible proportion d'un agent pour inhiber l'évaporation du monomère insaturé, laquelle composition contient comme promoteur d'adhérence, en une quantité n'excédant pas 5 % du poids de la composition, un composé de formule

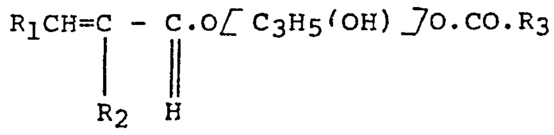

où

$R_1$ représente H, un radical alcoyle ou cycloaliphatique comptant jusqu'à 6 atomes de carbone, ou un radical phényle qui peut porter un ou deux radicaux méthyle comme substituants ;

$R_2$ représente H ou $CH_3$ ;

X représente $H_2$ ; H, $CH_3$ ; $(CH_3)_2$ ; ou =O ;

$[C_3H_5(OH)]$ représente $.CH_2.CH(OH).CH_2$ ou $.CH_2.CH(CH_2OH).$ ; et

$R_3$ représente un radical hydrocarboné aliphatique saturé ou insaturé comptant 5 à 17 atomes de carbone.

2. Composition suivant la revendication 1, dans laquelle le promoteur d'adhérence est un composé obtenu par réaction d'un composé glycidylique

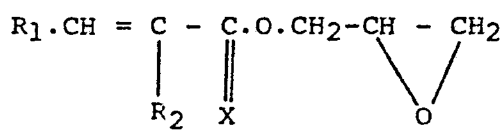

avec un acide aliphatique à longue chaîne $R_3.COOH$.

3. Composition suivant la revendication 2, dans laquelle le composé glycidylique est l'éther allylglycidylique.

4. Composition suivant la revendication 2, dans laquelle le composé glycidylique est le méthacrylate de glycidyle.

5. Composition suivant la revendication 2, 3 ou 4, dans laquelle l'acide aliphatique à longue chaîne compte 12 à 18 atomes de carbone.

6. Composition suivant la revendication 5, dans laquelle l'acide aliphatique à longue chaîne est l'acide laurique.

7. Composition suivant l'une quelconque des revendications 1 à 6, contenant 0,1 à 5 % en poids du promoteur d'adhérence.

8. Composition suivant la revendication 7, dans laquelle la teneur en promoteur d'adhérence est de 0,5 à 2,5 % en poids.